Europäisches Patentamt

European Patent Office

Office européen des brevets

(11) Numéro de publication: **0 037 618**
**A1**

(12) **DEMANDE DE BREVET EUROPEEN**

(21) Numéro de dépôt: **81200382.0**

(22) Date de dépôt: **06.04.81**

(51) Int. Cl.$^3$: **C 08 F 36/04**
**C 08 F 2/38, C 08 F 4/52**

(30) Priorité: **09.04.80 FR 8008110**

(43) Date de publication de la demande:
**14.10.81 Bulletin 81/41**

(84) Etats contractants désignés:
**AT BE CH DE GB IT LI LU NL SE**

(71) Demandeur: **MICHELIN & CIE (Compagnie Générale des Etablissements Michelin) Société dite:**
**4 rue du Terrail**
**F-63000 Clermont-Ferrand(FR)**

(72) Inventeur: **Freppel, Christian**
**124 bis avenue Joseph Claussat**
**F-63400 Chamalieres(FR)**

(74) Mandataire: **Hiebel, Robert et al,**
**MICHELIN & CIE - Service K. Brevets**
**F-63040 Clermont-Ferrand Cedex(FR)**

(54) **Procédé de préparation de polymères de diènes conjugués ou de copolymères de diènes conjugués, soit entre eux, soit avec un composé vinylaromatique.**

(57) Procédé de production de polymères de diènes conjugués et de copolymères de diènes conjugués, soit entre eux, soit avec des composés vinylaromatiques.

Il consiste à polymériser ou à copolymériser les monomères en solution dans un solvant inerte à une température comprise entre 20° et 200° C en présence d'un système catalytique constitué par le produit de réaction :

a) d'un composé organique d'un métal du groupe III A de la classification périodique des éléments du tableau de Mendéléev répondant à l'une des formules suivantes :

$Me_I M R_1 R_2 R_3 R_4$
$Me_{II} [M R_1 R_2 R_3 R_4]_2$
$M R_1 R_2 R_3$
$Me_I O M R_1 R_2$

b) et d'un ou plusieurs composés donneurs d'électrons renfermant un ou plusieurs hétéroatomes

et à ajouter en cours de polymérisation de l'hydrogène.

EP 0 037 618 A1

0037618

La présente invention a pour objet un procédé permettant de modifier la distribution des masses moléculaires lors de la synthèse d'homopolymères de diènes conjugués et de copolymères de diènes conjugués avec d'autres diènes conjugués ou avec des composés vinylaromatiques.

Il est connu d'après la demande de brevet allemand publiée avant examen n° 26 07 721, qui est au nom de la demanderesse, de préparer des polymères de diènes conjugués et des copolymères de diènes conjugués avec d'autres diènes conjugués ou avec des composés vinylaromatiques possédant des microstructures extrêmement variables et une distribution monomodale des masses moléculaires à l'aide d'un système catalytique constitué par le produit de réaction d'un composé organique d'un métal du groupe 3 A de la classification périodique des éléments du tableau de Mendeleev répondant à l'une des formules suivantes :

$$\text{Me}_1 \ \text{M R}_1 \ \text{R}_2 \ \text{R}_3 \ \text{R}_4$$
$$\text{Me}_2 \ [\ \text{M R}_1 \ \text{R}_2 \ \text{R}_3 \ \text{R}_4 \ ]_2$$
$$\text{M R}_1 \ \text{R}_2 \ \text{R}_3$$
$$\text{Me}_1 \ \text{O M R}_1 \ \text{R}_2$$

dans lesquelles $\text{Me}_1$ représente un métal alcalin, $\text{Me}_2$ représente un métal alcalino-terreux, M un métal du groupe 3 A, $R_1$, $R_2$, $R_3$ représentent un radical alcoyle ou aralcoyle et $R_4$ représente soit un reste alcoyle ou aralycoyle, soit un reste XB dans lequel X représente un atome d'oxygène, de soufre ou d'azote et B soit un radical alcoyle ou aralcoyle, soit un reste $\text{M} \ (R_5 \ R_6)$ dans lequel $R_5$, $R_6$ représentent un radical alcoyle ou aralcoyle, avec un ou plusieurs composés donneurs d'électrons renfermant un ou plusieurs hétéroatomes choisis parmi les composés polaires aprotiques, les composés polaires

...

protiques, les composés constitués par le produit de réaction des composés polaires protiques avec un métal alcalin ou alcalino-terreux.

Il est souhaitable de disposer de moyens permettant de modifier et de régler la distribution des masses moléculaires des polymères de diènes conjugués et des copolymères de diènes conjugués avec d'autres diènes conjugués ou avec des composés vinylaromatiques pour un certain nombre d'applications industrielles de ces produits car la modification de la distribution des masses moléculaires permet d'améliorer grandement certaines propriétés comme par exemple l'aptitude à être travaillé sur outil, le fluage à froid, la cohésion à cru, le collant à cru, etc. sans pénaliser les autres propriétés.

Il est connu de l'homme de l'art qu'il est possible d'élargir la distribution des masses moléculaires et d'obtenir des polymères bimodaux ou multimodaux en mélangeant plusieurs polymères de viscosités différentes.

Cependant, un tel procédé présente l'inconvénient de nécessiter la synthèse séparée de plusieurs polymères et copolymères de viscosités différentes ce qui entraîne des problèmes de reproductibilité du procédé, nécessite des quantités catalytiques très importantes, entraîne de longs délais et rend finalement ce procédé inintéressant tant du point de vue technique que du point de vue économique.

De même, il est connu de modifier la distribution des masses moléculaires de polymères et de copolymères dans des procédés réalisés soit en discontinu, soit en continu en fractionnant la quantité de catalyseur nécessaire et en l'ajoutant à des moments différents lors du déroulement de la polymérisation ou de la copolymérisation. Cependant, un tel mode opératoire qui nécessite également des quantités catalytiques très importantes, d'autant plus grandes que l'élargissement de la distribution des masses moléculaires souhaité est plus important, est par conséquent lui aussi très coûteux. De plus, il serait extrêmement difficile à réaliser industriellement.

...

La présente invention a pour objet de remédier à ces inconvénients en fournissant un procédé qui soit économiquement plus intéressant et qui permette de modifier et de régler facilement la distribution des masses moléculaires au cours de la synthèse de polymères de diènes conjugués et de copolymères de diènes conjugués avec d'autres diènes conjugués ou avec des composés vinylaromatiques et d'obtenir des polymères et des copolymères bimodaux ou multimodaux.

La demanderesse a trouvé de manière inattendue qu'il est possible d'atteindre ce but lorsque la polymérisation des diènes conjugués ou la copolymérisation des diènes conjugués avec d'autres diènes conjugués ou des composés vinylaromatiques à l'aide des systèmes catalytiques précités est effectuée en présence d'un agent modificateur qui n'est pas un initiateur de polymérisation ou de copolymérisation.

Ainsi la présente invention concerne un procédé de préparation de polymères de diènes conjugués et de copolymères de diènes conjugués avec d'autres diènes conjugués ou des composés vinylaromatiques, bimodaux ou multimodaux, consistant à faire réagir les monomères à une température comprise entre 20° C et 200° C en présence d'un système catalytique constitué par le produit de réaction d'un composé organique d'un métal du groupe 3A de la classification périodique des éléments du tableau de Mendeleev répondant à l'une des formules suivantes :

$$Me_1 \ M \ R_1 \ R_2 \ R_3 \ R_4$$

$$Me_2 \ [M \ R_1 \ R_2 \ R_3 \ R_4 \ ]_2$$

$$M \ R_1 \ R_2 \ R_3$$

$$Me_1 \ O \ M \ R_1 \ R_2$$

dans lesquelles $Me_1$ représente un métal alcalin, $Me_2$ représente un métal alcalino-terreux, M un métal du groupe 3 A, $R_1$, $R_2$, $R_3$ représentent un radical alcoyle ou aralcoyle et $R_4$ représente soit un reste alcoyle ou aralcoyle, soit un reste XB dans lequel X représente un atome d'oxygène, de soufre ou d'azote et B soit un radical alcoyle ou aralcoyle, soit un reste M ($R_5$ $R_6$) dans lequel $R_5$, $R_6$ représentent un radical alcoyle ou aralcoyle, avec un ou plusieurs composés

...

donneurs d'électrons renfermant un ou plusieurs hétéroatomes choisis parmi les composés polaires aprotiques, les composés polaires protiques, les composés constitués par le produit de réaction des composés polaires protiques avec un métal alcalin ou alcalino-terreux, caractérisé en ce qu'on ajoute en cours de polymérisation de l'hydrogène à titre d'agent modificateur.

Ce procédé permet de modifier à volonté la distribution des masses moléculaires et d'obtenir des propriétés de collant à cru, cohésion à cru et travaillabilité sur outil améliorées sans nécessiter des quantités supplémentaires de catalyseur et sans simultanément pénaliser les autres propriétés.

Le procédé conforme à l'invention permet d'obtenir des polymères et des copolymères ayant des distributions bimodales ou multimodales des masses moléculaires. La ou les fraction(s) obtenue(s) après addition de l'agent modificateur sont de bas poids moléculaire. En outre, les masses moléculaires moyennes de cette ou ces fractions de faibles masses moléculaires ainsi que la quantité de ces bas poids moléculaires sont fonction de la quantité d'agent modificateur ajouté et du moment auquel cet agent est ajouté lors du déroulement de la polymérisation.

Il est possible en choisissant la quantité à ajouter et le moment de l'addition en fonction du pourcentage de conversion des monomères à l'instant considéré par rapport au pourcentage de conversion final, de préparer des polymères et copolymères bimodaux ou multimodaux dont on peut régler à volonté la quantité des hauts poids et des bas poids moléculaires ainsi que les masses moléculaires moyennes respectives de ces hauts poids et bas poids moléculaires.

Il est souhaitable d'utiliser dans le milieu réactionnel des quantités d'hydrogène solubilisé comprises entre 0,1 et 100 ppm.

Plus la quantité d'hydrogène est importante, plus les bas poids moléculaires seront de faible masse.

L'hydrogène est ajouté en cours de réaction et de préférence lorsque la conversion des monomères est comprise

...

entre 20 % et 90 %. Le procédé peut être réalisé en masse ou en solution dans un solvant hydrocarboné soit en discontinu, soit en continu. Dans ce dernier cas, on opère dans deux ou plusieurs réacteurs placés en série à des températures de polymérisation identiques ou différentes. Selon l'importance de l'effet désiré, l'hydrogène est ajouté en une ou plusieurs fois.

Dans le procédé conforme à l'invention on peut utiliser à titre de solvant hydrocarboné des solvants aliphatiques comme l'hexane ou l'heptane ou aromatiques comme par exemple le benzène, le toluène.

Les composés organométalliques d'un métal du groupe 3A qui conviennent particulièrement à titre de constituants du système catalytique sont ceux dans lesquels le métal alcalin est le lithium, le sodium ou le·potassium et ceux dans lesquels le métal alcalino-terreux est le magnésium, le calcium, le strontium, le baryum. A titre d'exemples, on peut citer les composés suivants : $Al(CH_3)_3$, $Al(C_2H_5)_3$, $Al(i-C_4H_9)_3$, $Li[Al(C_2H_5)_4]$, $Na[Al(C_2H_5)_4]$, $K[Al(C_2H_5)_4]$, $Li[Al(C_2H_5)_3 O C_2H_5]$, $Li[Al(C_2H_5)_3 O Al(C_2H_5)_2]$, $Mg[Al(C_2H_5)_4]_2$, $C_2H_5 Mg Al(C_2H_5)_4$, $Ca[Al(C_2H_5)_4]_2$, $Sr[Al(C_2H_5)_4]_2$, $Ba[Al(C_2H_5)_4]_2$, $Ba[Al(C_2H_5)_3 O C_2H_5]_2$, $Ba[Al-(iso C_4H_9)_4]_2$, $Li O Al(C_2H_5)_2$, $Na O Al(C_2H_5)_2$, $B(CH_3)_3$, $B(C_2H_5)_3$, $Li B(C_2H_5)_4$, $Li B(C_2H_5)_3 C_4H_9$, $Ga(C_2H_5)_3$, $In(C_2H_5)_3$, $Tl(C_2H_5)_3$.

A titre de composés polaires aprotiques conviennent notamment les éthers et particulièrement les éthers cycliques comme le tétrahydrofuranne, le dioxane, ainsi que les thioéthers correspondants, les amines tertiaires telles que la N, N, N', N'-tétraméthyl-éthylène-diamine, les amines aromatiques et notamment les dérivés de pyridine et les oxydes correspondants, les composés phosphorés tels que les phosphines

...

et leurs oxydes, les phosphites, les phosphoramides et notamment l'hexaméthyl-phosphorotriamide, les cétones et particulièrement l'acétone, les nitriles et particulièrement l'acéto-nitrile, les aldéhydes, les esters, les amides, les composés nitro-aliphatiques ou aromatiques, les sulfoxydes et notamment le diméthyle sulfoxyde, les sulfones, les sulfites.

A titre de composés polaires protiques conviennent notamment l'eau, les alcools et particulièrement le méthanol, les amines primaires ou secondaires, les thiols.

A titre de composés des produits de réaction des composés polaires protiques avec un métal alcalin ou alcalino-terreux conviennent particulièrement les alcoolates et les phénates de métaux alcalins ou alcalino-terreux, les mercapto-et thiophénates alcalins ou alcalino-terreux, ainsi que les composés éther-alcoolates et amine-alcoolates. Le procédé selon l'invention convient notamment pour la polymérisation de diènes conjugués et la copolymérisation de diènes conjugués entre eux ou avec des composés vinylaromatiques.

Comme exemples représentatifs de diènes conjugués conviennent notamment le butadiène-1,3, l'isoprène, le 2,3-diméthyl-butadiène 1,3, le pentadiène-1,3, le méthyl-2-pentadiène-1,3, l'hexadiène 2,4.

Comme exemples représentatifs de composés vinylaromatiques conviennent notamment : le styrène, l'ortho-, méta-, para-méthylstyrène, le "vinyl-toluène", les di- et poly-méthyl styrènes, le p-tertiobutyl styrène, les vinylnaphtalènes, les methoxystyrènes, les halogénostyrènes, le vinylmésitylène, le divinyl benzène.

Les exemples non limitatifs suivants sont donnés à titre d'illustration de l'invention. Dans ces exemples, les viscosités inhérentes sont établies à 25° C en solution à 1g/litre dans le toluène ; les concentrations en composés constituant la composition catalytique sont exprimés en micromoles pour 100 g de monomères. Les pourcentages en enchaînements trans, 1,2 sont exprimés par rapport à la partie polybutadiénique et le pourcentage de styrène est exprimé par rapport à la quantité totale de copolymère obtenu.

...

Le temps écoulé entre le début de la réaction et le moment où l'on ajoute l'agent modificateur est désigné dans les exemples par "temps écoulé" et le pourcentage de conversion atteint au moment de l'addition de l'agent modificateur est désigné par "% conv.". Les figures représentent la distribution des masses moléculaires des polymères qui a été obtenue par chromatographie par perméation de gel. On représente en abscisse les masses moléculaires et en ordonnée une différence d'indice de réfraction $\Delta i$.

Exemple 1

On réalise 4 essais. Dans des bouteilles Steinie de 250 ml sous pression d'azote on introduit 68 g de toluène à titre de solvant et 13,6 g de monomères dont 77 % de butadiène et 23 % de styrène en poids. On ajoute alors dans l'ordre le système catalytique constitué par Li Al $(C_2H_5)_3$ $C_4H_9$ et $[C_2H_5 (O CH_2CH_2)_2 O]_2$ Ba. Les bouteilles sont placées dans un bac thermostaté à 80° C où elles sont agitées.

Dans les essais 1, 2 et 3 on ajoute en cours de polymérisation de l'hydrogène en quantité telle que la quantité solubilisée soit respectivement de 1,5, 3 et 5 ppm.

Au bout de 1h 45 mn toutes les réactions sont stoppées par addition de méthanol et on récupère les polymères de façon classique. Les résultats obtenus sont consignés dans le tableau I.

Plus la quantité d'hydrogène ajoutée est importante, plus les faibles masses moléculaires sont de bas poids moléculaire.

Exemple 2

On réalise deux essais. Dans des bouteilles Steinie de 250 ml sous pression d'azote on introduit 68 g de toluène à titre de solvant et 17,6 g de monomères dont 25 % de styrène en poids et 75 % de butadiène.

On ajoute alors le système catalytique constitué par Ba $[Al (C_2H_5)_4]_2$ et le tétrahydrofuranne. Les bouteilles sont placées dans un bac thermostaté à 80° C où elles sont agitées. Dans l'essai 1 on ajoute en cours de polymérisation de l'hydrogène en quantité telle que la quantité solubilisée soit de 5 ppm.

...

Au bout de 2h toutes les réactions sont stoppées par addition de méthanol et on récupère les polymères de façon classique. Les résultats sont consignés au tableau II.

Exemple 3

On réalise deux essais. Dans des bouteilles Steinie de 250 ml sous pression d'azote on introduit 68 g de toluène à titre de solvant et 17,5 g de butadiène. On ajoute alors le système catalytique constitué par Ba $[Al (C_2H_5)_4]_2$ et de l'éthyle diglycolate de lithium, $C_2H_5 (O CH_2CH_2)_2 O Li$. Les bouteilles sont placées dans un bac thermostaté à 70° C où elles sont agitées.

Dans l'essai 1 on ajoute en cours de polymérisation de l'hydrogène en quantité telle que la quantité solubilisée soit de 5 ppm.

Au bout de 2h toutes les réactions sont stoppées par addition de méthanol. Les résultats obtenus sont consignés dans le tableau III.

TABLEAU I

| Essai | système catalytique | | addition d'H$_2$ | | | % conv. final | Copolymères | | | | GPC fig. |
|---|---|---|---|---|---|---|---|---|---|---|---|
| | Li AlR$_4$ | Ba (OR)$_2$ | temps écoulé | % conv. | Quantité d'H$_2$ sol. en ppm. | | visco-sité | % 1-2 | % trans | % styrène | |
| T | 1294 | 588 | | | | 75 | 2,8 | 4,1 | 80 | 13 | 1.T |
| 1 | 1294 | 588 | 45 min | 55 | 1,5 | 77 | 2,5 | 4,1 | 80 | 14 | 1.1 |
| 2 | 1294 | 588 | 45 min | 55 | 3 | 75 | 2,4 | 4,1 | 80 | 13 | 1.2 |
| 3 | 1294 | 588 | 45 min | 55 | 5 | 78 | 2,2 | 4,2 | 80 | 14 | 1.3 |

TABLEAU II

| Essai | système catalytique | | addition d'H$_2$ | | | % conv. final | Copolymères | | | | GPC fig. |
|---|---|---|---|---|---|---|---|---|---|---|---|
| | Ba $[Al(C_2H_5)_4]_2$ : THF | | temps écoulé | % Conv. | Quantité d'H$_2$ sol. en ppm | | visco-sité | % 1-2 | % trans | % styrène | |
| T | 1140 | 4570 | | | | 83 | 2,16 | 6 | 75 | 13 | 2.T |
| 1 | 1140 | 4570 | 50 min | 35 | 5 | 83 | 1,29 | 6 | 74 | 14 | 2.1 |

TABLEAU III

| Essai | système catalytique | | addition d'$H_2$ | | | % conv. final | Polymère | | | |
|---|---|---|---|---|---|---|---|---|---|---|
| | Ba[Al $(C_2H_5)_4$]$_2$ | RO Li | temps écoulé | % conv. | Quantité d'$H_2$ sol. en ppm | | visco-sité | % 1-2 | % trans | GPC fig. |
| T | 1500 | 3000 | | | | 80 | 2,3 | 4 | 80 | 3.T |
| 1 | 1500 | 3000 | 30 min | 35 | 5 | 78 | 1,28 | 4 | 80 | 3.1 |

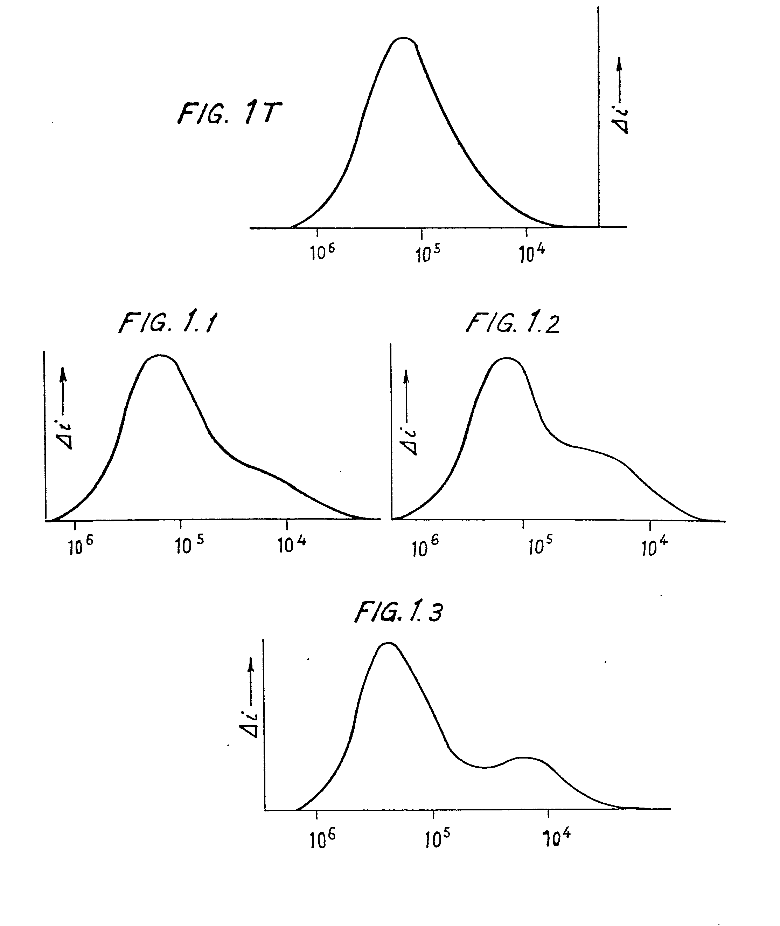

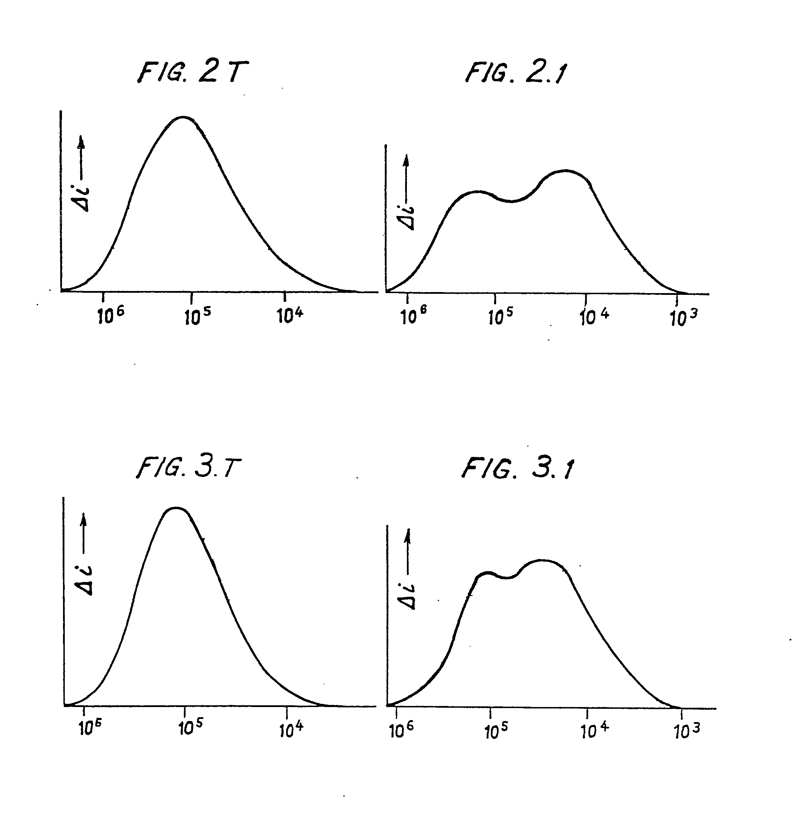

## REVENDICATIONS

1. Procédé de préparation de polymères bimodaux ou multimodaux de diènes conjugués et de copolymères bimodaux ou multimodaux de diènes conjugués avec d'autres diènes conjugués ou des composés vinylaromatiques consistant à faire réagir les monomères à une température comprise entre 20° C et 200° C en présence d'un système catalytique constitué par le produit de réaction d'un composé organique d'un métal du groupe 3A de la classification périodique des éléments du tableau de Mendeleev répondant à l'une des formules suivantes :

$$Me_1 \, M \, R_1 \, R_2 \, R_3 \, R_4$$
$$Me_2 \, [M \, R_1 \, R_2 \, R_3 \, R_4 \,]_2$$
$$M \, R_1 \, R_2 \, R_3$$
$$Me_1 \, O \, M \, R_1 \, R_2$$

dans lesquelles $Me_1$ représente un métal alcalin, $Me_2$ représente un métal alcalino-terreux, M un métal du groupe 3A, $R_1$, $R_2$, $R_3$ représentent un radical alcoyle ou aralcoyle et $R_4$ représente soit un reste alcoyle ou aralcoyle, soit un reste XB dans lequel X représente un atome d'oxygène, de soufre ou d'azote et B soit un radical alcoyle ou aralcoyle, soit un reste $M(R_5 \, R_6)$ dans lequel $R_5$, $R_6$ représentent un radical alcoyle ou aralcoyle, avec un ou plusieurs composés donneurs d'électrons renfermant un ou plusieurs hétéroatomes choisis parmi les composés polaires aprotiques, les composés polaires protiques, les composés constitués par le produit de réaction des composés polaires protiques avec un métal alcalin ou alcalino-terreux, caractérisé en ce qu'on ajoute au milieu réactionnel en cours de polymérisation de l'hydrogène.

2. Procédé selon la revendication 1, caractérisé en ce que la quantité d'hydrogène solubilisé dans le milieu réactionnel est comprise entre 0,1 et 100 ppm.

3. Procédé selon les revendications 1 et 2 caractérisé en ce que le système catalytique est constitué par le produit de réaction de $Li \, Al \, (C_2H_5)_3 \, C_4H_9$ et $[C_2H_5(O \, CH_2CH_2)_2 \, O]_2 \, Ba$.

...

4. Procédé selon les revendications 1 et 2 caractérisé en ce que le système catalytique est constitué par le produit de réaction de $Ba[Al(C_2H_5)_4]_2$ et le tétrahydrofuranne ou l'éthyl diglycolate de lithium.

5. Procédé selon l'une quelconque des revendications 1 à 4, caractérisé en ce qu'on opère la réaction en solution dans un solvant hydrocarboné.

6. Procédé selon la revendication 5, caractérisé en ce qu'on opère la réaction en continu.

1/2

003761 8

FIG. 1T

FIG. 1.1

FIG. 1.2

FIG. 1.3

FIG. 2T

FIG. 2.1

FIG. 3.T

FIG. 3.1

Office européen
des brevets

**RAPPORT DE RECHERCHE EUROPEENNE**

| Catégorie | Citation du document avec indication, en cas de besoin, des parties pertinentes | Revendication concernée |
|---|---|---|
| D | <u>FR- A - 2 302 311</u> (MICHELIN)<br>   * Revendication 1 *<br>& DE - A - 2 607 721<br><br>-- | 1,3-6 |
| | <u>FR - A - 1 584 855</u> (MONSANTO)<br>   * Résumé 5, page 4, lignes<br>     8-11 *<br><br>-- | 2 |
| | <u>US - A - 3 051 690</u> (E.J.VANDENBERG)<br>   * Revendication 3; colonne 4,<br>     ligne 68 - colonne 5, ligne<br>     2 *<br><br>-- | 2 |
| A | <u>FR - A - 1 441 732</u> (MICHELIN)<br>   * Résumé 4 *<br><br>---- | |

**DOCUMENTS CONSIDERES COMME PERTINENTS**

CLASSEMENT DE LA DEMANDE (Int. Cl.3)

C 08 F 36/04
2/38
4/52

DOMAINES TECHNIQUES RECHERCHES (Int. Cl.3)

C 08 F   36/04
136/04
236/04
2/00
2/06
4/42
4/44
4/52

CATEGORIE DES DOCUMENTS CITES

X: particulièrement pertinent
A: arrière-plan technologique
O: divulgation non-écrite
P: document intercalaire
T: théorie ou principe à la base
   de l'invention
E: demande faisant interférence
D: document cité dans
   la demande
L: document cité pour d'autres
   raisons
&: membre de la même famille,
   document correspondant

Le présent rapport de recherche a été établi pour toutes les revendications

| Lieu de la recherche | Date d'achèvement de la recherche | Examinateur |
|---|---|---|
| La Haye | 22-06-1981 | V. HUMBEECK |

OEB Form 1503.1   06.78